(19) Europäisches Patentamt
European Patent Office
Office européen des brevets

(11) **EP 2 428 724 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(51) Int Cl.:
*F21S 8/10* *(2006.01)*       *F21V 7/00* *(2006.01)*
*B60Q 1/26* *(2006.01)*

(21) Anmeldenummer: **10175805.0**

(22) Anmeldetag: **08.09.2010**

(54) **Optimale Lichteinkopplung für Rückblickeinrichtungen**

Optimal light coupling for rear view devices

Couplage de lumière optimal pour dispositifs rétroviseurs

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**14.03.2012 Patentblatt 2012/11**

(73) Patentinhaber: **SMR Patents S.à.r.l.**
**1653 Luxembourg (LU)**

(72) Erfinder:
• **Fritz, Daniel**
**70374 Stuttgart (DE)**

• **Schmierer, Arne**
**73230 Kirchheim (DE)**

(74) Vertreter: **Weber-Bruls, Dorothée et al**
**Jones Day**
**Nextower**
**Thurn-und-Taxis-Platz 6**
**60313 Frankfurt am Main (DE)**

(56) Entgegenhaltungen:
**EP-A1- 1 288 562       DE-A1-102005 019 093**
**US-A1- 2002 080 615       US-A1- 2008 291 683**

EP 2 428 724 B1

**Beschreibung**

Die Erfindung betrifft eine Fahrzeugrückblickvorrichtung in Form eines Fahrzeugaußenspiegels oder einer Kamera unter begrenzten Bauraumverhältnissen in einem Fahrzeug mit einer Vorrichtung zur optimalen Einkopplung von Licht in mindestens einen Lichtleiter in einem Beleuchtungselement in der Fahrzeugrückblickvorrichtung.

Stand der Technik

Konventionelle Außenspiegel haben ein Design, das es erlaubt, dass der Spiegelkopf gegenüber dem Spiegelfuß von Hand oder motorisch in Fahrtrichtung des Fahrzeuges nach hinten abgeklappt werden kann. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz-LEDs verwendet, die entgegen der Fahrtrichtung abstrahlen und am äußersten Rand des Außenspiegels im Blinker integriert sind.

Nach den ECE Regeln soll ein Zusatzblinklicht im Außenspiegel einen Bereich beginnend bei 5° von der Fahrzeuglängsachse bis zu 60 ° zur Fahrzeuglängsachse in Fahrtgegenrichtung ausleuchten. Die Lichtstärke in diesem gesetzlich vorgeschrieben Bereich ist dabei definiert und muss erreicht werden.

Aus dem Stand der Technik ist eine Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Als Leuchtmittel werden durch die bekannten Vorteile immer mehr LEDs verwendet.

Aus der EP 1 120 312 ist ein Außenspiegel mit Blinker bekannt, der ein Leuchtmodul aufweist, in dem eine Vielzahl von LEDs durch Öffnungen eines Reflektors scheinen. Die LED, die sich am äußersten Rand des Außenspiegels befindet, hat, eine Abstrahlrichtung, die den gesetzlichen Regelungen über die Abstrahlcharakteristik entspricht. Die Strahlformung wird über den Reflektor erzielt. Das gesamte Leuchtmodul wird in das Gehäuse des Außenspiegels verklipst und über eine Steckverbindung elektrisch kontaktiert. Der Aufbau des Leuchtmoduls für den Blinker ist aufwendig und teuer, da eine Vielzahl von LEDs entlang eines langgestreckten Leuchtmoduls angebracht sind.

Die Verwendung von Lichtleittechnik zur Beleuchtung eines Blinkers in Außenspiegel bietet sich an, da der Bauraum im Außenspiegel begrenzt ist und mit einem Lichtleiter der Lichtaustritt in ästhetischer Weise erreicht werden kann, wobei die Einkopplung des Lichts an einer Endfläche des Lichtleiters erfolgt.

Aus der DE 10 2005 019 093 A1 ist eine Fahrzeugleuchte mit einem mehrgliedrig gebildeten Lichtleiter bekannt.

Die EP 1 288 562 A1 beschreibt eine Leuchte für ein Kraftfahrzeug mit einem Lichtleiter definierter Struktur.

Als Stand der Technik ist ferner die EP 0 858 932 zu nennen, die eine Ausbildung eines Lichtleiters in einem Leuchtmodul für einen Spiegelblinker beschreibt. Zur Einkopplung des Lichtes in den Lichtleiter des Spiegelblinkers werden ebenfalls unterschiedliche Ausführungsformen vorgeschlagen. Problematisch ist dabei, ausreichend Licht am Ende des Lichtleiters zur Erfüllung der gesetzlichen Anforderungen zur Verfügung zu haben.

Zur Einkopplung von Licht werden auch sogenannte TIR (Total Internal Reflection) Linsen vorgeschlagen. Diese TIR-Linsen weisen eine Vielzahl von facettierten Strukturen auf, die das Licht intern reflektieren und im Resultat zu einem Parallelisieren des Lichtes führen. Aus der US 5,806,955 ist ein planarer flächiger Lichtleiter bekannt, in den das Licht über mehrere TIR-Linsen eingekoppelt wird, sowie ein langgestreckter Lichtleiter, der an seiner Einkoppelfläche eine TIR- Struktur aufweist.

Die US 2008/0291683 offenbart eine TIR-Linse, deren Einstrahlfläche eine domförmige Linse einer LED umfasst und umschließt.

Eine LED innerhalb einer rotationssymmetrischen schalenförmigen Kollimatorlinse ist aus der US 2002/0080615 bekannt.

Um die Einkopplung unter Verwendung von TIR-Linsen weiterhin zu verbessern und auch unter den begrenzten Bauraumbedingungen eines Fahrzeugblinkers eine optimale Ausnutzung des ausgestrahlten Lichtes zu erhalten, schlägt die Erfindung vor, eine spezielle Ausgestaltung einer TIR-Linse zu verwenden, die die strahlende LED effektiv umfasst. Durch die räumlich komplette Umfassung der LED mit der TIR-Linse gelingt es, die Lichtstärke der LED effizient in den Lichtleiter zu überführen und damit Designanforderungen sowie den gesetzlichen Mindest-Lichtstärken im Auskoppelbereich zu genügen.

Beschreibung der Erfindung

Fig. 1 zeigt eine typische Ausführungsform eines Spiegelblinkers;
Fig. 2 und 3 zeigen die erfindungsgemäße Ausführungsform der Einkopplung;
Fig. 4 zeigt ein Beispiel mit einer speziellen LED;
Fig. 5 zeigt den Aufbau einer verwendeten LED;

Fig.6 zeigt eine Ausführung einer LED;
Fig. 7 zeigt einen Lichtleiter mit mehreren Einkoppelflächen, und
Fig. 8 zeigt eine TIR-Linse mit mehreren Aussparungen.

Die Vorteile der Erfindung werden in der nachfolgenden Beschreibung näher erläutert. Die gewählten Beispiele umfassen dabei hauptsächlich den Einsatz der Vorrichtung für die Beleuchtung eines Blinkers. Die Vorrichtung zur Einkopplung von Licht kann aber auch in anderen beleuchteten Elementen des Fahrzeugspiegels angebracht sein. Die erfindungsgemäße Lösung kann durch den geringen Bauraum auch in andere Rückblicklösungen am Fahrzeug wie ein einer Kamera angebracht werden.

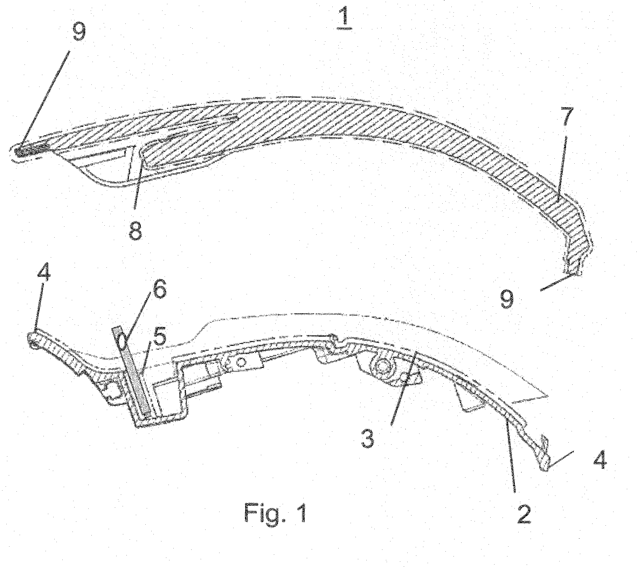

Fig. 1 zeigt eine schematische Zeichnung eines Blinkermoduls, wie es vorzugsweise in einem Außenspiegel an einem Kraftfahrzeug verwendet wird. Der Blinker des Außenspiegels in diesem Beispiel besteht aus zwei maßgeblichen Bauteilen, die sich zu einem Blinkermodul 1 zusammenfügen lassen. Das Blinkermodul 1 wird in einen Außenspiegel eingebaut, wobei sich der Blinker im Außenspiegelgehäuse befindet und sich entlang der Außenkontur des Außenspiegelgehäuses erstreckt. Eine Gehäuserückwand 2 des Blinkermoduls dient zur Aufnahme eines Reflektors 3, falls einer im Modul verbaut wird, und einer Leiterplatte 5. Die Leiterplatte 5 dient zur Versorgung der LED oder der Vielzahl von LEDs und trägt die Ansteuerelektronik.

Die Leiterplatte ist über Direktkontaktierung oder über Stecker mit dem automobilen Bordnetz verbunden. Die Gehäuserückwand 2 des Blinkermoduls ist mit einem Lichtfenster 7 verbunden, das das Modul nach außen abdichtet und lichtdurchlässig ist.

Auf der Leiterplatte 5 ist beispielhaft eine LED 6 eingezeichnet, die nach Zusammenfügen der beiden Hauptbauteile so positioniert ist, dass die LED auf der Stirnseite 8 des Lichtleiters 7 Licht einkoppeln kann. Das Lichtfenster besteht in der gezeigten Ausführungsform aus einer einteiligen Form, die einen Lichtleiter integriert enthält. Die Gehäuserückwand 2 und das Lichtfenster 7 werden an ihren exponierten Enden 4 und 9 zusammengefügt, z.B. verschweißt. Lichtleiter, die in ein Lichtfenster integriert sind und in einteiliger Form ausgeführt sind, haben eine Doppelfunktion, nämlich das Licht zu leiten und das Blinkermodul wasser- und staubdicht zu verschließen. Die integrierte Lösung stellt dabei eine höhere Herausforderung für die Ausbildung der Lichtleiteigenschaften dar, aber reduziert die Anzahl der herzustellenden Teile und den Montageaufwand.

In alternativen Ausführungsformen werden Lichtleiter als einzelne Bauteile in das Blinkermodul eingelegt und fixiert und eine getrennte Lichtscheibe verschließt das Modul.

Die Erfindung lässt sich auch in Spiegelblinkern mit einem geänderten Aufbau verwenden, solange mindestens ein Lichtleiter vorhanden ist.

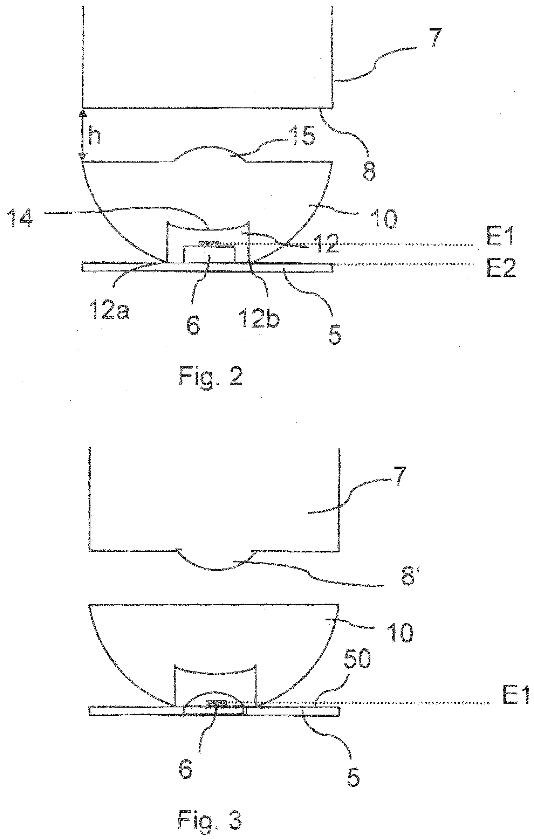

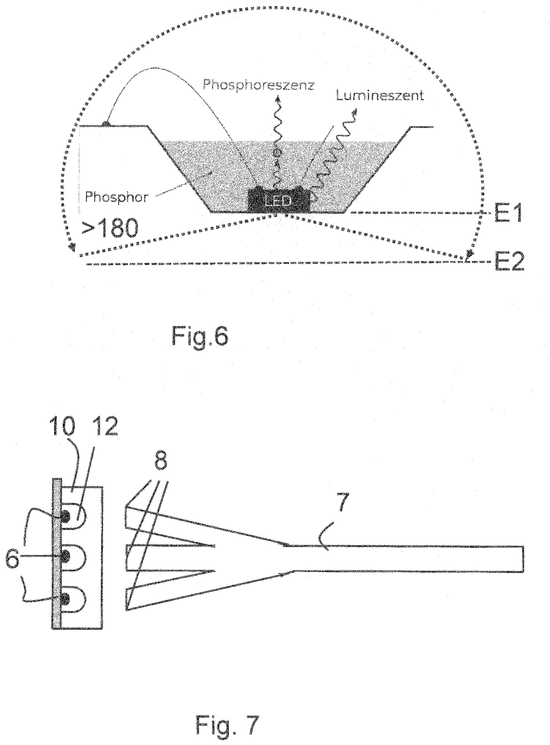

Die erfindungswesentliche Vorrichtung zur Einkopplung in den Lichtleiter des Spiegelblinkers wird in den Figuren 2 und 3 beschrieben. Eine TIR-Linse 10 weist einen Ausnehmung 12 auf, in die eine LED 6 hineinragt. Das Beispiel der Figur 2 zeigt eine LED, die als SMT-Chip aufgebaut ist. Diese LEDs werden mit oder ohne Kunststoff-Dom hergestellt und werden über mindestens zwei Kontakte mit einer Leiterplatte 5 verlötet. In Figur 2 wird eine LED , wie in Figur 6 näher dargestellt, verwendet. Eine solche LED weist eine Bauhöhe von 0,5 bis 5 mm über der Leiterplatte 5 auf.

Die Ausnehmung 12 der erfindungsgemäße TIR-Linse umfasst den gesamten Bereich der optischen Emission, der oberhalb der Halbleiterebene E1 auftritt, in dem die Ausnehmung 12 sich bis zur Leiterplatte 5 und damit bis zur Bauhöhe E2 relativ zur Leiterplatte erstreckt. Die Halbleiterstruktur, speziell der p-n Übergang der Diode ist dabei über die Bauhöhe E1-E2 ganz von der Aussparung in der TIR-Linse umgeben. Die TIR Linse weist in dieser Ausführungsform einen halbkugeligen Körper auf, in dem die Aussparung als zylindrische Ausnehmung angeordnet ist. Im Beispiel weist die TIR-Linse in ihrer Ausnehmung 12 eine konvexe Linsenstruktur 14 auf, die zusätzlich Licht sammelt. Diese konvexe Linse kann in einer Ausführungsform von einer weiteren Linse 15 unterstützt werden, die auf der Austrittsfläche der TIR-Linse 10 aufgebracht ist.

Figur 3 zeigt einen Ausführung mit einer LED, die im through-hole-Verfahren montiert ist. Dabei wird der angespitzte Kunststoff-Dom der LED 6 durch eine Öffnung der Leiterplatte geführt. Der strahlende p-n Übergang befindet sich dann ebenfalls knapp über der Oberfläche E2 der Leiterplatte 5. Die aufgesetzte TIR-Linse 10 umfasst dabei den strahlenden Bereich der LED auf drei Seiten. In anderen Worten ausgedrückt umfasst die Ausnehmung 12 der TIR-Linse einen Raumwinkel von mehr als 180 Grad bezogen auf die Ebene E1 des Halbleitermaterials der LED. In Fig. 6 wird schematisch der Aufbau einer LED dargestellt, wobei die gesamten elektrischen Verbindungen und die Gehäuse nicht sichtbar sind. Die TIR-Linse umgreift den Reflektor der LED und erstreckt sich unter die Ebene E1 bis E2, sodass der umfasste Raumwinkel mehr als 180°beträgt .
Die TIR-Linse wird im Kontaktbereich 12a und 12b auf der Leiterplatte befestigt, um eine sichere Positionierung der LED in Bezug auf die Linse zu erzielen. Die Linse kann dabei geklebt oder gesteckt werden, jede andere dem Fachmann geläufige Befestigungsmöglichkeit ist ebenfalls möglich.

Die Einkopplung des ausgesendeten Lichtes der TIR-Linse erfolgt über einen Luftspalt der Höhe h. Dieser Luftspalt ist ein Parameter zur optimalen Ausleuchtung des Lichtleiters. Der zweimalige Wechsel des Brechungsindex vom TIR-Linsenmedium zu Luft und von Luft zu Lichtleitermedium ermöglicht die optimale Anpassung. Lichtleiter und TIR-Linse werden vorzugsweise aus optisch klarem Kunststoff gespritzt, wobei die verwendeten Materialien wie PMMA einen Berechnungsindex von 1,49 haben, aber auch Kunststoffe mit einem Brechungsindex von bis zu 1,6 und höher können vorhanden sein.

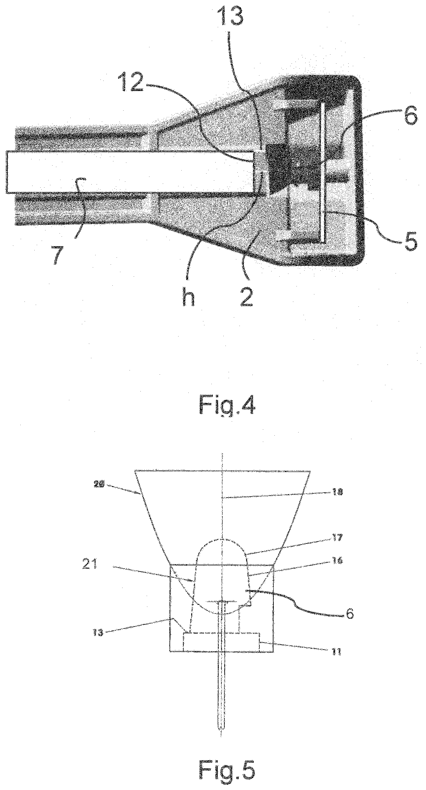

Ein beispielhafter Aufbau wird dabei in Fig. 4 gezeigt. Die Gehäuserückwand 2 des Blinkermoduls ist Basis für eine Leiterplatte 5, auf der die LED montiert ist. Die LED 6 ist eine LED mit angespritzter TIR-Linse. Der Lichtleiter liegt in dieser Ausführungsform mit einer planen Fläche 8 parallel zur Austrittsfläche 13 der LED mit angespritzter TIR-Linse.

Eine vorteilhafte Ausführungsform wählt den Durchmesser der Lichtleiters 7 entsprechend dem Durchmesser der LED mit TIR-Linse. Der Lichtleiter wird dabei in einem Abstand h von der TIR-Linse 10 der LED positioniert, der zwischen 0 und 10 mm beträgt. Um das ganze abgestrahlte Licht einzufangen, kann die Dimension des Lichtleiters auch größer als der Durchmesser der TIR Linse sein.

Durch die Abstrahlcharakteristik der LED mit TIR-Linse deckt ein Lichtleiter mit Radius R alle abgestrahlten Strahlen ab, wenn der Radius des Lichtleiters im Verhältnis zum Abstand h zwischen den optischen Bauteilen der Regel folgt:

$$\text{Delta R} = h * \tan(\text{Abstrahlwinkel}) \,,$$

wobei Delta R die Zunahme des Radius des Lichtleiters im Verhältnis zum Abstand ist.

Bei einem typischen Abstrahlwinkel von 5° wäre der Radius des Lichtleiters positioniert bei einem Abstand von 4 mm von der TIR-Linse um 0,7 mm im Verhältnis zur Abstrahlfläche der TIR-Linse zu vergrößern, um das Licht effektiv einzukoppeln.

In alternativen Ausführungsformen sind auch andere Geometrien als eine kreisrunde Einkoppelgeometrie möglich. Für den Spiegelblinker werden Lichtleiter mit flächiger Ausgestaltung als Lichtfenster verwendet, sowie Lichtleiterstäbe mit elliptischem oder rechteckigem Querschnitt.

Ist der Querschnitt hinreichend groß, wird trotzdem der Großteil des zur Verfügung stehenden Lichts über die TIR-Linse eingekoppelt.

Durch neuere Entwicklungen in der Technik der LEDs wird es möglich, einen Spiegelblinker zu gestalten, der einfach ausgeführt wird und durch den Einsatz spezieller LEDs optimal ausgeleuchtet wird.

Spezielle LEDs sind aus der WO 2005/034251 bekannt und für den Einsatz im automobilen Umfeld vorgeschlagen. Dazu wird ein erster, innerer LED-Teilkörper in einem Bereich von einem zweiten, äußeren LED-Teilkörper umgeben und hintergriffen. Das Verfahren ermöglicht eine formschlüssige, sichere Verbindung zwischen zwei in separaten Schritten, z. B. zeitlich und räumlich getrennt herstellbaren LED-Teilkörpern, wobei ein Teilkörper den anderen zumindest bereichsweise hintergreift.

Figur 5 zeigt diesen Stand der Technik mit einer LED, deren lichtleitender Körper in mindestens zwei getrennten Fertigungsschritten beispielsweise spritzgusstechnisch hergestellt wird. In einem ersten Schritt wird ein LED-Teilkörper 21 hergestellt. Letzterer hat beispielsweise eine geometrische Form, die im Wesentlichen aus drei übereinander angeordneten Geometriekörpern besteht. Der erste Geometriekörper ist ein kurzer, zumindest annähernd gerader Zylinder 11. Der zweite Geometriekörper ist ein auf der oberen Stirnfläche 13 des Zylinders 11 angeordneter Kegelstumpf 16, der sich vom Zylinder 11 weg verjüngt. Der dritte Geometriekörper ist eine Kalotte 17 bzw. eine fast halbkugelige Kappe, die auf der oberen, kleineren Stirnfläche des Kegelstumpfes positioniert ist. Konzentrisch um die Mittelachse 18 angeordnet erstreckt sich ein vierter Körper 20 in Form eines offenen Paraboloids. Da der äußere LED-Teilkörper 20 um den anderen Körper 21 in einer Spritzgussform umspritzt wird, entsteht bei der entsprechenden Werkstoffkombination eine verschmolzene Einheit ohne Gaseinschlüsse.

Eine solche LED kann als Basis für eine Lichtquelle des Spiegelblinkers dienen. Mit einem anlogen Verfahren wird eine LED hergestellt, die aus einer zylindrischen Basis besteht, die mit einer TIR-Linse direkt umspritzt ist. Die TIR-Linse ersetzt dabei den Kegelstumpf 16, die Kalotte 17 und den äußeren Körper 20. Die TIR-Linse wird als erstes Spritzgußteil hergestellt und die LED danach mit dem Zylinder 11 umspritzt. Der Vorteil besteht darin, dass keine weitere Optik außer der angespritzten TIR-Linse verwendet werden muss, um Licht in den Lichtleiter einzukoppeln.

Die Lichtausbeute in einem Lichtleiter hängt dabei immer davon ab, wie parallel die Strahlen der LED auf die Einkoppelfläche des Lichtleiters treffen. Die Abstrahl-Charakteristik einer normalen LED erstreckt sich über den gesamten Raumwinkel von 180° oberhalb ihrer Montagefläche. Diese Abstrahleigenschaften werden durch den internen Reflektor der LED bereits beeinflusst und der Strahlengang gebündelt. Je gerichteter die Abstrahlung erfolgt, desto besser lässt sich das Licht in einen Lichtleiter einkoppeln. Das Beispiel der Figur 6 zeigt eine LED bestehend aus einem lichtabstrahlenden Halbleiter, der auf dem Boden eines Reflektors montiert ist. Zur Herstellung einer weißen LED wird zusätzlich eine phosphoreszierende Substanz eingebracht, die zu Wellenlängenverschiebungen und zur Verbreiterung des Spektrums führt. Die Ebene E1 bezeichnet die untere Begrenzung des Halbleiters der LED. Die Ebene E2 liegt unterhalb und der von der Aussparung der TIR-Linse umfasste Raumwinkel ist daher größer als 180°.

Selbst ohne den Standard-Reflektor ist die Einkopplung des Lichts bei Verwendung der erfindungsgemäßen TIR-Linse möglich.

Figur 7 zeigt eine Erweiterung der Erfindungsidee zu einer Lichtleiterlösung mit mehreren Einkoppelstellen 8. Eine TIR-Linse, die mehrere Aussparungen 12 für LEDs 6 aufweist, ist vor dem Lichtleiter angeordnet und koppelt Licht in die Struktur ein. Eine solche Lösung ist vorteilhaft, wenn ein Indikations- oder Warnlicht realisiert werden soll. Die LEDs haben dann eine unterschiedliche Farbe. Je nach darzustellender Information kann somit ein grünes Signallicht oder ein rotes Signallicht eingespeist werden und an den Endpunkt des Lichtleiters 7 transportiert werden. Damit kann ein Warnlichtanzeige realisiert werden.

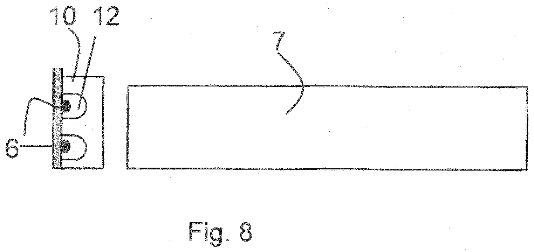

Eine Ausbildung der TIR-Linse mit mehreren Aussparungen ist auch in Figur 8 gezeigt. Hier wird die Einkopplung an nur einer Einkoppelfläche 8 des Lichtleiters vorgenommen, während die TIR-Linse wieder mehrere Aussparungen 12 aufweist. Eine solche Lösung ist für den Einsatz als Umfeldbeleuchtung montiert am Außenspiegel oder am Fahrzeug von Vorteil. Auch normale Blinker können so mit Licht versorgt werden. Durch Verwendung einer TIR-Linse mit mehreren Aussparungen wird das Licht mehrerer LEDs vereint und eine optimale Ausleuchtung des Lichtleiters erzielt.

Die vorgeschlagene Vorrichtung zur Einkopplung von Licht wird auch für den Einsatz im Kamerasystemen am Fahrzeug vorgeschlagen. Ersetzt man einen Außenspiegel durch ein Kameramodul verschärft sich das Bauraumproblem. Jede Art von Singnalisierung und Beleuchtung, sei es der normale Blinker, sei es eine Umfeldleuchte oder eine Warnanzeige muss mit dem kleinsten Bauraum auskommen. Die erfindungsgemäße Lösung stellt hier einen Fortschritt dar.

Auch für einen Innenspiegel als Rückblickeinheit ist die Lösung von Vorteil. Ein Innenspiegel kann ebenfalls Warnanzeigen oder eine Beleuchtung als Leseleuchte oder als Ambientebeleuchtung enthalten.

**Patentansprüche**

1. Fahrzeugrückblickvorrichtung mit einem Beleuchtungselement, einer Lichtquelle, mindestens einem Lichtleiter und einer Vorrichtung zur optimalen Einkopplung von Licht in den Lichtleiter in dem Beleuchtungselement, wobei der Lichtleiter (7) mindestens eine Einkoppelfläche (8) aufweist, die beabstandet von mindestens einer TIR-Linse (10) ist, die Lichtquelle aus mindestens einer LED (6) besteht, die in eine Ausnehmung (12) der mindestens einen TIR-Linse (10) ragt, und die mindestens eine Ausnehmung der TIR-Linse (10) die mindestes eine LED (6) in einem Raumwinkel von mindestens 180 ° umfasst, und die TIR-Linse sich bis unterhalb der Halbleiterebene (E1) der LED (6) erstreckt, so dass die Ausnehmung (12) der TIR-Linse (10) den gesamten Bereich der optischen Emission der LED (6) umfasst.

2. Fahrzeugrückblickvorrichtung nach Anspruch 1, **dadurch gekennzeichnet, dass** die Ausnehmung (12) der TIR-Linse (10) eine konvexe Linse (14) bildet.

3. Fahrzeugrückblickvorrichtung nach Anspruch 1, **dadurch gekennzeichnet, dass** die die Ausnehmung (12) ein zylindrischer Hohlraum ist.

4. Fahrzeugrückblickvorrichtung nach Anspruch 1, **dadurch gekennzeichnet, dass** die TIR-Linse (10) sich bis unterhalb der Ebene (E1) des LED Halbleiters erstreckt.

5. Fahrzeugrückblickvorrichtung nach Anspruch 1, **dadurch gekennzeichnet, dass** die TIR-Linse (10) eine plane Auskoppelfläche aufweist.

6. Fahrzeugrückblickvorrichtung nach Anspruch 1, **dadurch gekennzeichnet, dass** die TIR-Linse (10) eine Auskoppelfläche mit einer konvexen Linse (15) aufweist.

7. Fahrzeugrückblickvorrichtung nach Anspruch 1, **dadurch gekennzeichnet, dass** die TIR-Linse (10) auf der Oberfläche (E2) einer Leiterplatte.(5) befestigt ist.

8. Fahrzeugrückblickvorrichtung nach Anspruch 1, **dadurch gekennzeichnet, dass** der Lichtleiter in dem Beleuchtungselement der Fahrzeugrückblickvorrichtung wie in einem Blinkermodul (1) eines Fahrrichtungsanzeigers, wie in einem Umfeldbeleuchtungsmodul, oder wie in einem Warnanzeiger eingesetzt ist.

9. Fahrzeugrückblickvorrichtung nach Anspruch 1, **dadurch gekennzeichnet, dass** die LED (6) direkt mit einer TIR-Linse (10) umspritzt ist.

10. Fahrzeugrückblickvorrichtung nach Anspruch 9, **dadurch gekennzeichnet, dass** die LED (6) in mindestens zwei Spitzguß - Schritten hergestellt ist, wobei ein Schritt das Spritzen der TIR-Linse (10) umfasst.

11. Fahrzeugrückblickvorrichtung nach Anspruch 1, **dadurch gekennzeichnet, dass** der Lichtleiter (7) an seiner Einkoppelfläche (8) eine Linsenstruktur (8') aufweist.

12. Fahrzeugrückblickvorrichtung nach Anspruch 1, **dadurch gekennzeichnet, dass** der Lichtleiter (7) mehrere Einkoppelflächen (8) aufweist.

13. Fahrzeugrückblickvorrichtung nach Anspruch 1 und 9, **dadurch gekennzeichnet, dass** die TIR-Linse (10) mehrere Aussparungen (12) für mehrere LEDs (6) aufweist.

14. Fahrzeugrückblickvorrichtung nach Anspruch 13, **dadurch gekennzeichnet, dass** das Licht mehrerer LEDs (6) in einen Lichtleiter (7) einkoppelt.

**15.** Fahrzeugrückblickvorrichtung nach Anspruch 13, **dadurch gekennzeichnet, dass** das Licht mehrerer LEDs (6) in jeweils eine Einkoppelfläche (8) eines Lichtleiters (7) einkoppelt.

**Claims**

**1.** A vehicle rear view device with an illuminating element, a light source, at least one light guide and a device for optimal coupling of light into the light guide in the illuminating element, wherein
the light guide (7) has at least one coupling surface (8) which is spaced apart from at least one TIR lens (10),
the light source consists of at least one LED (6) which extends into a recess (12) of the at least one TIR lens (10), and
the at least one recess of the TIR lens (10) comprises the at least one LED (6) in a solid angle of at least 180°, and
the TIR lens extends to below the semiconductor level (E1) of the LED (6) such that the recess (12) of the TIR lens (10) comprises the whole range of the optical emission of the LED (6).

**2.** The vehicle rear view device of claim 1, **characterized in that** the recess (12) of the TIR lens (10) forms a convex lens (14).

**3.** The vehicle rear view device of claim 1, **characterized in that** the recess (12) is a cylindrical cavity.

**4.** The vehicle rear view device of claim 1, **characterized in that** the TIR lens (10) extends to below the level (E1) of the LED semiconductor.

**5.** The vehicle rear view device of claim 1, **characterized in that** the TIR lens (10) has a plane outcoupling surface.

**6.** The vehicle rear view device of claim 1, **characterized in that** the TIR lens (10) has a decoupling surface with a convex lens (15).

**7.** The vehicle rear view device of claim 1, **characterized in that** the TIR lens (10) is attached to the surface (E2) of a printed circuit board (5).

**8.** The vehicle rear view device of claim 1, **characterized in that** the light guide is used in the illuminating element of the vehicle rear view device in the same way as in an indicator module (1) of a direction indicator, in an environment lighting module or in a warning indicator.

**9.** The vehicle rear view device of claim 1, **characterized in that** the LED (6) is directly overmoulded with a TIR lens (10).

**10.** The vehicle rear view device of claim 9, **characterized in that** the LED (6) is produced in at least two injection moulding steps, wherein one step comprises the injection moulding of the TIR lens (10).

**11.** The vehicle rear view device of claim 1, **characterized in that** the light guide (7) has a lens structure (8') at its coupling surface (8).

**12.** The vehicle rear view device of claim 1, **characterized in that** the light guide (7) has several coupling surfaces (8).

**13.** The vehicle rear view device of claim 1 and 9, **characterized in that** the TIR lens (10) has several recesses (12) for several LEDs (6).

**14.** The vehicle rear view device of claim 13, **characterized in that** the light of several LEDs (6) couples into a light guide (7).

**15.** The vehicle rear view device of claim 13, **characterized in that** the light of several LEDs (6) couples each into one of the several coupling surfaces (8) of a light guide (7).

**Revendications**

**1.** Dispositif de rétroviseur pour véhicule, avec un élément d'éclairage, une source de lumière, au moins un guide de lumière et un dispositif pour le couplage optimal de lumière dans le guide de lumière dans l'élément d'éclairage, le guide de lumière (7) ayant au moins une surface de couplage (8) qui est distante d'au moins une lentille TIR (10),
la source de lumière se composant d'au moins une LED (6) qui s'étendant dans un renfoncement (12) de la lentille TIR (10) au moins au nombre de un, et le renfoncement au moins au nombre de un de la lentille TIR (10) comprend la LED (6) au moins au nombre de un dans un angle spatial d'au moins 180°, et
la lentille TIR s'étend jusqu'au-dessous du plan de semi-conducteur (E1) de la LED (6) de telle sorte que le renfoncement (12) de la lentille TIR (10) comprend toute la zone de l'émission optique de la LED (6).

**2.** Dispositif de rétroviseur pour véhicule selon la revendication 1, **caractérisé en ce que** le renfoncement (12) de la lentille TIR (10) est une lentille (14) convexe.

**3.** Dispositif de rétroviseur pour véhicule selon la revendication 1, **caractérisé en ce que** le renfoncement (12) est une cavité cylindrique.

**4.** Dispositif de rétroviseur pour véhicule selon la revendication 1, **caractérisé en ce que** la lentille TIR (10) s'étend jusqu'au-dessous du plan (E1) du semi-conducteur de LED.

**5.** Dispositif de rétroviseur pour véhicule selon la revendication 1, **caractérisé en ce que** la lentille TIR (10) ayant une surface de découplage plane.

**6.** Dispositif de rétroviseur pour véhicule selon la revendication 1, **caractérisé en ce que** la lentille TIR (10) présente une surface de découplage avec une lentille (15) convexe.

**7.** Dispositif de rétroviseur pour véhicule selon la revendication 1, **caractérisé en ce que** la lentille TIR (10) est fixée sur la surface (E2) d'un circuit imprimé (5).

**8.** Dispositif de rétroviseur pour véhicule selon la revendication 1, **caractérisé en ce que** le guide de lumière est usagé dans l'élément d'éclairage du dispositif rétroviseur pour véhicule comme dans un module de clignotant (1) d'un indicateur de changement de direction, comme dans un module d'éclairage d'environnement ou comme dans un indicateur d'alarme.

**9.** Dispositif de rétroviseur pour véhicule selon la revendication 1, **caractérisé en ce que** la LED (6) est surmoulée directement avec une lentille TIR (10).

**10.** Dispositif de rétroviseur pour véhicule selon la revendication 9, **caractérisé en ce que** la LED (6) est fabriquée en au moins deux étapes de moulage par injection, une étape comprenant l'injection de la lentille TIR (10).

**11.** Dispositif de rétroviseur pour véhicule selon la revendication 1, **caractérisé en ce que**, sur sa surface de couplage (8), le guide de lumière (7) ayant une structure de lentille (8').

**12.** Dispositif de rétroviseur pour véhicule selon la revendication 1, **caractérisé en ce que** le guide de lumière (7) ayant des plusieurs surfaces de couplage (8).

**13.** Dispositif de rétroviseur pour véhicule selon les revendications 1 et 9, **caractérisé en ce que** la lentille TIR (10) présente plusieurs renfoncements (12) pour plusieurs LED (6).

**14.** Dispositif de rétroviseur pour véhicule selon la revendication 13, **caractérisé en ce que** la lumière de plusieurs LED (6) est couplée dans un guide de lumière (7).

**15.** Dispositif de rétroviseur pour véhicule selon la revendication 13, **caractérisé en ce que** la lumière de plusieurs LED (6) est couplée dans respectivement une des surface de couplage (8) d'un guide de lumière (7).

Fig. 1

**Fig. 2**

**Fig. 3**

Fig.4

Fig.5

EP 2 428 724 B1

Fig.6

Fig. 7

11

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1120312 A
- DE 102005019093 A1
- EP 1288562 A1
- EP 0858932 A
- US 5806955 A
- US 20080291683 A
- US 20020080615 A
- WO 2005034251 A